# EUROPÄISCHE PATENTSCHRIFT

(11) **EP 0 422 411 B1**
(45) Veröffentlichungstag und Bekanntmachung des Hinweises auf die Patenterteilung: **25.05.1994**
(21) Anmeldenummer: 90117722.0
(22) Anmeldetag: 14.09.1990
(51) Int. Cl.: B60R 21/00, B60R 22/00

(54) **Zündmechanismus für einen pyrotechnischen Gasgenerator**
Ignition mechanism for a pyrotechnic gas generator
Dispositif d'allumage pour générateur pyrotechnique de gaz

(30) Priorität: 09.10.1989 DE 3933720
(43) Veröffentlichungstag der Anmeldung: 17.04.1991
(73) Patentinhaber: TRW REPA GMBH, 73553 Alfdorf (DE)
(72) Erfinder: Föhl, Artur, D-7060 Schorndorf (DE)
(74) Vertreter: Degwert, Hartmut, Dipl.-Phys.

(56) Entgegenhaltungen:
- DE-A- 3 742 961
- US-A- 3 749 282
- US-A- 3 982 775

## Beschreibung

Die Erfindung betrifft einen Zündmechanismus für einen pyrotechnischen Gasgenerator in der Rückstrammeinrichtung eines Sicherheitsgurt-Rückhaltesystems, mit einer schwenkbar gelagerten, fahrzeugsensitiven Trägheitsmasse, einem federbeaufschlagten, schwenkbar gelagerten Schlagstück, einem Schlagbolzen, der mit einem freien Ende dem Schlagzünder des Gasgenerators gegenüberliegend und mit seinem anderen Ende dem Schlagstück gegenüberliegend angeordnet ist, und einem Auslösemechanismus, der bei fahrzeugsensitiver Verschwenkung der Trägheitsmasse nach Überwindung einer Hemmschwelle den Schlagbolzen freigibt, welcher dann unter der Wirkung der Federbeaufschlagung die Zündung des Gasgenerators bewirkt.

Aus der DE 37 42 961 A1 ist ein Zündmechanismus für einen pyrotechnischen Gasgenerator bekannt, der ein Gehäuse aufweist. In diesem ist eine Sensormasse mittels eines Gelenkzapfens an seinem oberen Ende nach Art eines Pendels aufgehängt. Ein Auslösehebel wird von der Sensormasse an dem unteren Ende in einem Bereitschaftszustand gehalten. Der Auslösehebel hält ein federbeaufschlagtes Schlagstück, das mit einem Schlagbolzen einstückig ausgebildet ist und in dem Gehäuse zur Auslösung der Zündung des Gasgenerators geführt ist. Wird die Sensormasse aufgrund von auftretenden Verzögerungen gegen eine Federkraft über einen vorbestimmten Bereich verschwenkt, wird der Auslösehebel so freigegeben, daß die Federkraft das Schlagstück mit dem Schlagbolzen in Richtung auf eine Zündkapsel treibt und somit die Zündung auslöst.

Der Erfindung liegt die Aufgabe zugrunde, bei einem Zündmechanismus der eingangs angegebenen Art eine Konstruktion anzugeben, die einfach aufgebaut sowie einfach herstellbar ist und mit geringen Massen eine sichere Zündung gewährleistet.

Diese Aufgabe wird bei einem Zündmechanismus der eingangs angegebenen Art dadurch gelöst, daß im Bereitschaftszustand das Schlagstück im Abstand von dem gegenüberliegenden Ende des Schagbolzens gehalten wird und bei der Freigabe des Schlagstücks dieses zu dem gegenüberliegenden Ende des Schlagbolzens getrieben wird, auf dem Schlagbolzen aufschlägt.

Der Auslösemechanismus wird vorzugsweise als Rollengesperre ausgebildet. Ein solches Rollengesperre umfaßt eine an dem vom Schlagbolzen abgewandten Ende des Schlagstücks gelagerte Halterolle, eine an der Trägheitsmasse gelagerte Auslöserolle, eine gehäusefest gelagerte Stützrolle und eine im Bereitschaftszustand zwischen Halterolle, Auslöserolle und Stützrolle gehaltene, lose Sperrolle. Im Bereitschaftszustand nimmt die Sperrolle zwischen der Halterolle und der Stützrolle eine Übertotpunktlage ein, in der sie durch die Auslöserolle gehalten wird. Die Auslöserolle ihrerseits befindet sich in einer Übertotpunktlage, in der sie durch ein gehäusefestes Widerlager abgestützt ist. Bei fahrzeugsensitiver Verschwenkung der Trägheitsmasse gibt die Auslöserolle die Sperrolle frei, die dann zwischen Stützrolle und Halterolle herausgeschleudert wird, wodurch der Weg der Halterolle freigegeben wird und das Schlagstück unter der Wirkung der Federbeaufschlagung zu dem Schlagbolzen hingetrieben wird.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: einen schematischen Schnitt des Zündmechanismus im Bereitschaftszustand;
- Fig. 2: den Zündmechanismus von Fig. 1 im aktivierten Zustand;
- Fig. 3: eine auseinandergezogene Perspektivansicht des in in den Fig. 1 und 2 gezeigten Zündmechanismus; und
- Fig. 4: eine schematische Teilansicht eines Rollengesperres des Zündmechanismus.

Im Inneren des flachen Gehäuses 10 ist eine Trägheitsmasse 12 in Form eines allgemein U-förmigen Bügels angeordnet, der auf einem gehäusefesten Stift 14 am freien Ende des einen Schenkels schwenkbar gelagert ist. Ein Schlagstück 16 in Form eines zweiarmigen Hebels ist auf einem gehäusefesten Stift 18 schwenkbar gelagert. Der eine Arm des Schlagstücks 16 wird durch eine Druckfeder 20 in Richtung des im Abstand gegenüberliegenden freien Endes eines Schlagbolzens 22 beaufschlagt. Am freien Ende des anderen Armes des Schlagstücks 16 ist eine Halterolle 24 drehbar gelagert. Weiterhin ist auf einem gehäusefesten Stift 26 eine Stützrolle 28 drehbar gelagert. Zwischen der Stützrolle 28 und der Halterolle 24 ist eine lose Sperrolle 30 angeordnet. Schließlich ist eine Auslöserolle 32 am freien Ende des anderen Schenkels der Trägheitsmasse 12 drehbar gelagert. Das Gehäuse 10 ist durch eine schmale Bodenplatte 34 verschlossen, die einen angeformten Befestigungsansatz 36 aufweist, durch den sich der Schlagbolzen 22 erstreckt.

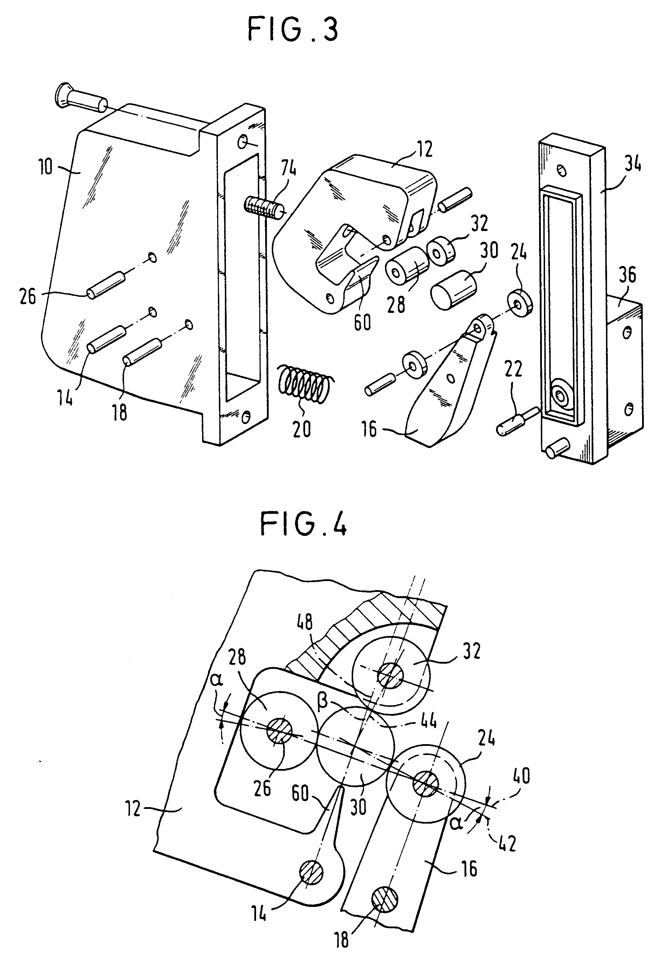

Auf Fig. 4 wird Bezug genommen. Die lose Sperrolle 30 befindet sich zwischen den an den Ecken eines Dreiecks angeordneten Rollen 24, 28 und 32 und liegt mit ihrem Außenumfang jeweils am Außenumfang dieser Rollen an. Die Halterolle 24 wird durch die Wirkung der Druckfeder 20 gegen den Außenumfang der Sperrolle 30 gedrückt, die ihrerseits gegen den Außenumfang der Auslöserolle 32 drückt, da sie am Außenumfang der Stützrolle 28 abgestützt wird. Die Sperrolle 30 befindet sich zwischen der Stützrolle 28 und der Halterolle 24 in einer Übertotpunktlage, die dadurch gekennzeichnet ist, daß der Winkel α zwischen einer Geraden 40 durch die Mittelpunkte der Rollen 24 und 28 und der Geraden 42 durch die Mittelpunkte der Rollen 24 und 30 eine Größe von wenigen Grad aufweist. Die Rolle 30 ist also bestrebt, sich zu der Auslöserolle 32 hin zu verlagern. Diese Auslöserolle 32 befindet sich ihrerseits in einer Übertotpunktlage, die durch einen Winkel β gekennzeichnet ist, der zwischen einer Geraden 44 durch die Mittelpunkte der Rollen 30 und 32 und einer Geraden 48 gebildet ist, welche senkrecht zu der die Mittelpunkte der Rollen 24, 28 verbindenden Geraden 40 verläuft. Die Auslöserolle 32 kann ihrer Neigung, sich im Sinne einer Vergrößerung des Winkels β zu verlagern, nicht folgen, da die Trägheitsmasse 12 mit der Innenfläche ihres die beiden Schenkel verbindenden Steges am Außenumfang der Stützrolle 28 anliegt. Ebenso gut könnte aber die Trägheitsmasse 12 an einem anderen Anschlag anliegen, durch den die Auslöserolle 32 in einer metastabilen Lage gehalten wird.

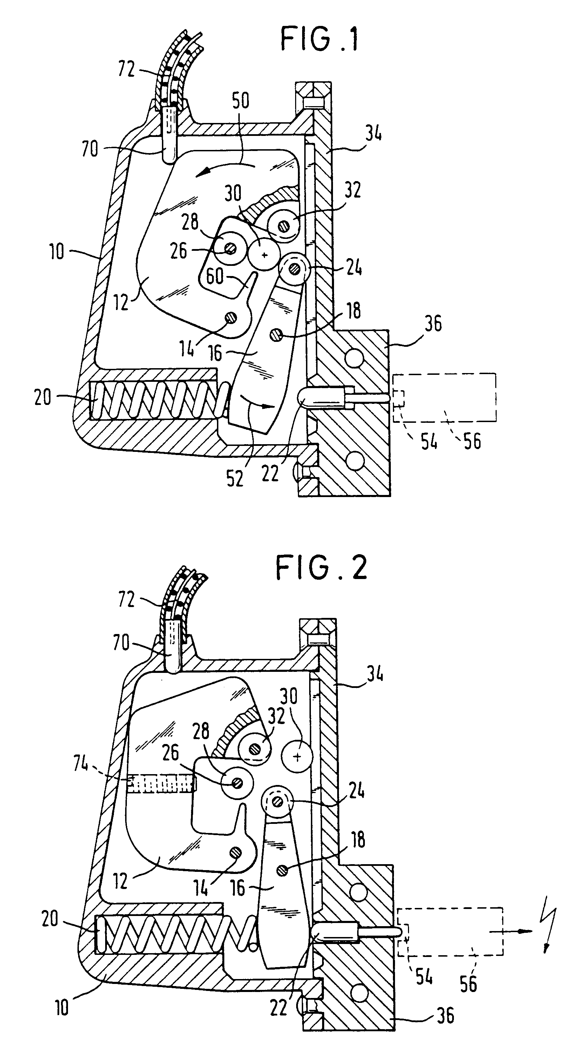

Die Trägheitsmasse 12 bildet ein fahrzeugsensitives Auslöseelement. Unter der Wirkung einer Fahrzeugverzögerung wird sie aufgrund ihrer Massenträgheit in Richtung des Pfeiles 50 (Fig. 1) um den Stift 14 verschwenkt, sobald eine bestimmte Hemmschwelle überwunden ist, die durch die Größe der Winkel α, β, die Kraft der Druckfeder 20 und die Hebelübersetzung des Schlagstücks 16 gegeben ist und genau eingestellt werden kann. Sobald die Hemmschwelle überwunden ist, die Auslöserolle 32 sich also zunächst im Sinne einer Verkleinerung des Winkels β (Fig. 4) und darüber hinaus bewegt hat, unterstützt die Druckfeder 20 die weitere Verschwenkung der Trägheitsmasse 12 in Richtung des Pfeiles 50 (Fig. 1), so daß die Verschwenkung der Trägheitsmasse 12 mit hoher Winkelbeschleunigung erfolgt. Innerhalb einer extrem kurzen Zeitspanne gibt die Auslöserolle 32 die lose Sperrolle 30 frei, die zwischen den Rollen 24, 28 herausgeschleudert wird und die Bahn der Halterolle 24 freigibt, so daß nunmehr das Schlagstück 16 unter der Wirkung der Druckfeder 20 in Richtung des Pfeiles 52 (Fig. 1) verschwenkt und gegen das benachbarte freie Ende des Schlagbolzens 22 getrieben wird. Der Schlagbolzen 22 dringt mit seinem gegenüberliegenden freien Ende in einen Schlagzünder 54 eines Gasgenerators 56 ein, um diesen zu aktivieren. Fig. 2 zeigt diesen Zustand.

Um die Montage der Sperrolle 30 zu erleichtern, ist am freien Endes des schwenkbar gelagerten Schenkels der Trägheitsmasse 12 ein schnabelförmiger Fortsatz 60 angeformt, der in der in Fig. 4 gezeigten Bereitschaftsstellung auf die Sperrolle 30 zu gerichtet ist und in geringem Abstand von dieser endet. Der Gasgenerator 56 ist Bestandteil einer nicht gezeigten Sicherheitsgurt-Rückstrammeinrichtung, an die der Zündmechanismus unmittelbar mittels des Befestigungsansatzes 36 angebaut werden kann.

Bei der in den Fig. 1 und 2 gezeigten Ausführungsform ist die Trägheitsmasse 12 in ihrer Bereitschaftsstellung so lange gesichert, wie das zugehörige Gurtsystem unbenutzt ist. Zu diesem Zweck greift an der Trägheitsmasse 12 ein Stift 70 an, der in einer Gehäusebohrung des Gehäuses 10 verschiebbar gelagert ist und in die Bewegungsbahn der Trägheitsmasse 12 hineinragt, solange keine Steckzunge in das Gurtschloß des Sicherheitsgurtsystems eingesteckt ist. Die Einsteckbewegung der Steckzunge in das Gurtschloß wird über einen Seilzug 72 auf den Stift 70 übertragen, der dann aus der Bahn der Trägheitsmasse 12 herausgezogen wird und diese entsichert. Da zahlreiche Ausführungsformen einer Sicherung möglich sind, wird diese hier nur symbolisch beschrieben.

Der beschriebene Zündmechanismus ist, obwohl er fahrzeugsensitiv anspricht, nicht an eine bestimmte Einbauorientierung gebunden. Günstig ist eine Einbauorientierung, bei welcher die durch den Schwerpunkt und die Schwenkachse der Trägheitsmasse 12 verlaufende Gerade einen Winkel von etwa 45° mit der Senkrechten bildet. Der Zündmechanismus kann dann unverändert auch um 90° verdreht eingebaut werden.

Wie in Fig. 2 angedeutet ist, kann die Trägheitsmasse 12 mit einer Einstellschraube 74 versehen sein, um ihre Bereitschaftsstellung präzise einzustellen, insbesondere also den Winkel β (Fig. 4).

## Patentansprüche

1. Zündmechanismus für einen pyrotechnischen Gasgenerator in der Rückstrammeinrichtung eines Sicherheitsgurt-Rückhaltesystems, mit
- einer schwenkbar gelagerten, fahrzeugsensitiven Trägheitsmasse (12);
- einem federbeaufschlagten, schwenkbar gelagerten Schlagstück (16);
- einem Schlagbolzen (22), der mit einem freien Ende dem Schlagzünder (54) des Gasgenerators (56) gegenüberliegend und mit seinem anderen Ende dem Schlagstück (16) gegenüberliegend angeordnet ist; und
- einem Auslösemechanismus, der bei fahrzeugsensitiver Verschwenkung der Trägheitsmasse (12) nach Überwindung einer Hemmschwelle den Schlagbolzen (22) freigibt, welcher dann unter der Wirkung der Federbeaufschlagung die Zündung des Gasgenerators (56) bewirkt,
**dadurch gekennzeichnet,** daß im Bereitschaftszustand das Schlagstück (16) im Abstand von dem gegenüberliegenden Ende des Schlagbolzens (22) gehalten wird und bei der Freigabe des Schlagstücks (16) dieses zu dem gegenüberliegenden Ende des Schlagbolzens (22) getrieben wird und auf dem Schlagbolzen (22) aufschlägt.

2. Zündmechanismus nach Anspruch 1, **dadurch gekennzeichnet,** daß der Auslösemechanismus ein Rollengesperre umfaßt, mit
- einer an dem vom Schlagbolzen (22) abgewandten Ende des Schlagstücks (16) gelagerten Halterolle (24);
- einer an der Trägheitsmasse (12) gelagerten Auslöserolle (32);
- einer gehäusefest gelagerten Stützrolle (28); und
- einer im Bereitschaftszustand zwischen Halterolle (24), Auslöserolle (32) und Stützrolle (28) gehaltenen, losen Sperrolle (30),
und daß im Bereitschaftszustand die Sperrolle (30) zwischen der Halterolle (24) und der Stützrolle (30) eine Übertotpunktlage einnimmt, in der sie durch die Auslöserolle (32) gehalten wird, die sich ihrerseits in einer Übertotpunktlage befindet, in der sie durch ein gehäusefestes Widerlager abgestützt ist.

3. Zündmechanismus nach Anspruch 2, **dadurch gekennzeichnet,** daß das gehäusefeste Widerlager durch die Stützrolle (28) gebildet ist, an der sich die Trägheitsmasse (12) abstützt.

4. Zündmechanismus nach Anspruch 2 oder 3, **dadurch gekennzeichnet,** daß die Trägheitsmasse (12) als allgemein U-förmiger Bügel ausgebildet ist, der an dem Ende seines einen Schenkels schwenkbar gelagert ist und an dessen Ende des anderen Schenkels die Auslöserolle (32) angeordnet ist.

5. Zündmechanismus nach Anspruch 4, **dadurch gekennzeichnet,** daß der Bügel am Ende seines schwenkbar gelagerten Schenkels einen Ansatz (60) aufweist, der zu der Sperrolle (30) hin gerichtet ist und in geringem Abstand von dieser endet.

6. Zündmechanismus nach Anspruch 4 oder 5, **dadurch gekennzeichnet,** daß die Stützrolle (28) zwischen den Schenkeln des Bügels angeordnet ist und sich der Bügel mit der Innenseite seines die Schenkel verbindenden Steges am Umfang der Stützrolle abstützt.

7. Zündmechanismus nach einem der Ansprüche 1 bis 6, **dadurch gekennzeichnet,** daß die Trägheitsmasse (12) durch eine Sicherungseinrichtung (70, 72) in ihrer Bereitschaftsstellung arretierbar ist und daß die Sicherungseinrichtung auf die Benutzung des Sicherheitsgurt-Rückhaltesystems ansprechend die Arretierung der Trägheitsmasse (12) aufhebt.

8. Zündmechanismus nach einem der Ansprüche 1 bis 7, **dadurch gekennzeichnet,** daß der Auslösemechanismus in einem flachen Gehäuse (10) aufgenommen ist, das durch eine schmale Bodenplatte (34) verschlossen ist, die der Schlagbolzen (22) durchquert.

## Claims

1. Firing mechanism for a pyrotechnical gas generator in the tightening means of a safety belt restraining system, with
- a pivotally mounted vehicle-sensitive inertia mass (12):
- a spring-loaded pivotally mounted striking piece (16):
- a firing pin (22) arranged with its free end opposite the impact fuse (54) of the gas generator (56) and with its other end opposite the striking piece (16); and
- a trigger mechanism which on vehicle-sensitive pivoting of the inertia mass (12) after overcoming an inhibition threshold releases the firing pin (22) which then under the action of the spring biasing effects firing of the gas generator (56),
characterized in that in the readiness state the striking piece (16) is held at a distance from the opposite end of the firing pin (22) and upon releasing said striking piece (16) it is driven to the facing end of the firing pin (22), striking it.

2. Firing mechanism according to claim 1, characterized in that the trigger mechanism includes a roller blocking mechanism comprising
- a retaining roller (24) mounted at the end of the strike piece (16) remote from the firing pin (22);
- a release roller (32) mounted on the inertia mass (12);
- a support roller (28) mounted fixed with respect to the housing; and
- a loose blocking roller (30) held in the readiness state between retaining roller (24), release roller (32) and support roller (28),
and that in the readiness state the blocking roller (30) assumes between the retaining roller (24) and the support roller (28) an over-deadcentre position in which it is held by the release roller (32) which in turn is disposed in an over-deadcentre position in which it is supported by a housing-fixed abutment.

3. Firing mechanism according to claim 2, characterized in that the housing-fixed abutment is formed by the support roller (28) on which the inertia mass (12) bears.

4. Firing mechanism according to claim 2 or 3, characterized in that the inertia mass (12) is formed as generally U-shaped stirrup member which is pivotally mounted at the end of its one leg and on the end of the other leg thereof the release roller (32) is arranged.

5. Firing mechanism according to claim 4, characterized in that the stirrup member comprises at the end of its pivotally mounted leg a projection (60) which is directed towards the blocking roller (30) and ends at a slight distance from the latter.

6. Firing mechanism according to claim 4 or 5, characterized in that the support roller (28) is arranged between the legs of the stirrup member and the stirrup member bears with the inner side of its web connecting the legs on the periphery of the support roller.

7. Firing mechanism according to any one of claims 1 to 6, characterized in that the inertia mass (12) is arrestable by a securing means (70, 72) in its readiness position and that the securing means in response to the use of the safety belt restraining system cancels the arresting of the inertia mass (12).

8. Firing mechanism according to any one of claims 1 to 7, characterized in that the release mechanism is received in a flat housing (10) which is closed by a narrow bottom plate (34) through which the firing pin (22) passes.

## Revendications

1. Mécanisme d'allumage d'un générateur pyrotechnique de gaz, placé dans le rétracteur d'un système de retenue de ceinture de sécurité, comportant
- une masse d'inertie (12) montée pivotante, réagissant au véhicule;
- une pièce de percussion (16) montée pivotante, soumise à l'action d'un ressort;
- un percuteur (22) qui, par une extrémité libre, est placé face à l'amorce à percussion (54) du générateur de gaz (56) et, par son autre extrémité, face à la pièce de percussion (16); et
- un mécanisme de déclenchement qui en cas de pivotement, réagissant au véhicule, de la masse d'inertie (12), après dépassement d'un seuil de retenue, libère le percuteur (22), lequel provoque alors, sous l'effet du ressort, l'allumage du générateur de gaz (56),
caractérisé en ce qu'en état d'attente, la pièce de percussion (16) est maintenue à distance de l'extrémité du percuteur (22) lui faisant face, et en libérant cette pièce de percussion (16), elle est poussée vers l'extrémité lui faisant face du percuteur (22), le percutant.

2. Mécanisme d'allumage selon la revendication 1, caractérisé en ce que le mécanisme de déclenchement comporte un mécanisme de verrouillage à rouleaux avec
- un rouleau de maintien (24) monté à l'extrémité de la pièce de percussion (16), opposée au percuteur (22);
- un rouleau de déclenchement (32) monté sur la masse d'inertie (12);
- un rouleau d'appui (28) solidaire du boîtier; et
- un rouleau de verrouillage (30) libre, maintenu dans l'état d'attente, entre le rouleau de maintien (24), le rouleau de déclenchement (32) et le rouleau d'appui (28),
et en ce qu'en attente, le rouleau de verrouillage (30) occupe une position de dépassement de point mort, entre le rouleau de maintien (24) et le rouleau d'appui (30), dans laquelle il est maintenu par le rouleau de déclenchement (32) qui, de son côté, se trouve dans une position de dépassement de point mort dans laquelle il est soutenu par une butée solidaire du boîtier.

3. Mécanisme d'allumage selon la revendication 2, caractérisé en ce que la butée solidaire du boîtier est formée par le rouleau d'appui (28) contre lequel prend appui la masse d'inertie (12).

4. Mécanisme d'allumage selon la revendication 2 ou 3, caractérisé en ce que la masse d'inertie (12) est un étrier généralement en U qui est monté pivotant à l'extrémité de l'une de ses branches et dont l'autre branche supporte à son extrémité le rouleau de déclenchement (32).

5. Mécanisme d'allumage selon la revendication 4, caractérisé en ce que l'étrier comporte, à l'extrémité de sa branche montée pivotante, un prolongement (60) qui est dirigé vers le rouleau de verrouillage (30) et qui se termine à une faible distance de celui-ci.

6. Mécanisme d'allumage selon la revendication 4 ou 5, caractérisé en ce que le rouleau d'appui (28) est placé entre les branches de l'étrier et en ce que l'étrier prend appui sur le pourtour du rouleau d'appui, par la face intérieure de son entretoise reliant les branches.

7. Mécanisme d'allumage selon l'une des revendications 1 à 6, caractérisé en ce que la masse d'inertie (12) peut être bloquée dans sa position d'attente par un dispositif de sûreté (70, 72) et en ce que le dispositif de sûreté, réagissant à l'utilisation du système de retenue de ceinture de sécurité, supprime le blocage de la masse d'inertie (12).

8. Mécanisme d'allumage selon l'une des revendications 1 à 7, caractérisé en ce que le mécanisme de déclenchement est logé dans un boîtier (10) plat qui est fermé par une plaque de fond (34) étroite que traverse le percuteur (22).
